# EUROPÄISCHE PATENTSCHRIFT

(11) **EP 0 774 345 B1**
(45) Veröffentlichungstag und Bekanntmachung des Hinweises auf die Patenterteilung: **07.08.2002**
(21) Anmeldenummer: 96117795.3
(22) Anmeldetag: 07.11.1996
(51) Int. Cl.: B32B 27/08, B60R 13/02

(54) **Kunststofffolie bestehend aus einem Polyolefin**
Plastic film comprising a polyolefin
Feuille en matière plastique contenant une polyoléfine

(30) Priorität: 18.11.1995 DE 19543135
(43) Veröffentlichungstag der Anmeldung: 21.05.1997
(73) Patentinhaber: 4P Folie Forchheim GmbH, D-91301 Forchheim (DE)
(72) Erfinder: Fürst, Michael, 91332 Heiligenstadt (DE)
(74) Vertreter: Hutzelmann, Gerhard

(56) Entgegenhaltungen:
- DE-A- 3 502 056
- DE-A- 3 510 018
- DE-A- 3 519 064
- GB-A- 2 170 148
- US-A- 5 143 676
- DATABASE WPI Section Ch, Week 8426 Derwent Publications Ltd., London, GB; Class A88, AN 84-162081 XP002023266 & JP-A-59 087 119 (KANSAI HO-ON KOGYO) , 19.Mai 1984

## Beschreibung

Die Erfindung bezieht sich auf eine Kunststoffolie bestehend aus einem Polyolefin, insbesondere Polypropylen-Copolymer.

Der Erfindung liegt die Aufgabe zugrunde, von ihr abgedeckte Teile vor dem Niederschlagen von Kondensat und/oder gegen das Eindringen von Feuchtigkeit zu schützen.

Diese Aufgabe wird erfindungsgemäß dadurch gelöst, daß die Folie flammhemmend, wenigstens einseitig silikonisiert, an nicht silikonisierten Stellen wenigstens partiell mit Klebstoff beschichtet ist und dadurch, daß zwischen dem Polyolefm-Trägermaterial und der Silikonschicht eine flammhemmende Zwischenschicht, insbesondere ein flammhemmender Lack angeordnet ist.

Diese Folie ist wasserdampfdicht; an der Silikonbeschichtung haftet der Klebstoff nicht, wodurch die Folie ohne weitere Zwischenlagen -Trennfolien- stapelbar ist. Hierdurch wird eine enorme Kostenersparnis und eine weitaus geringere Umweltbelastung als mit zusätzlichen Trennfolien erreicht. Zudem werden durch die flammhemmende Ausbildung der Trägerfolie die Anforderungen der Autoindustrie zur Brandverhütung auf einfache und effiziente Art und Weise erfüllt.

Eine vorteilhafte weitere Ausgestaltung der Erfindung liegt darin, daß die Silikonschicht durch einen Silikonauftrag von 0,1 bis 2,5 µm Dicke gebildet wird, und daß die Zwischenschicht eine Dicke von 0,5 bis 10 µm aufweist.

Ebenfalls hat es sich als vorteilhaft erwiesen, wenn gemäß einer weiteren Ausgestaltung der Erfindung die Silikon- und/oder die Zwischenschicht aus mehreren Einzelschichten gebildet sind.

Durch diesen Schichtenaufbau können mehrer Einzelschichten mit leicht variierenden Materialien zu einer an den Einsatzzweck angepassten Gesamtschicht aufgebaut sein.

Die gemäß der Erfindung hergestellte Kunststoffolie wird vorzugsweise als Kondensschutzfolie und/oder Feuchtigkeitssperre für Innenraumverkleidungen in Kraftfahrzeugen verwendet.

Diese Folie verhindert wirksam das Feuchtwerden von Innenraumverkleidungsteilen und somit unter anderem die Schimmelbildung.

Gemäß einer weiteren vorteilhaften Verwendung ist die Kunststoffolie auf die Innenseiten von Blechen aufgeklebt, wobei ein möglichst geringer Abstand von den Innenverkleidungen gewahrt wird.

Hierdurch werden die aufgrund von starken Temperaturunterschieden besonders beim Niederschlagen von Kondensat bevorzugten Verkleidungsteile besonders wirksam geschützt.

Eine weitere vorteilhafte Verwendung der Kunststoffolie ist dadurch gekennzeichnet, daß die Folie zwischen dem für versenkbare Fenster freizuhaltenden Raum und einer dem Innenraum zugekehrten Innenverkleidung angeordnet ist.

Dadurch wird die Innenverkleidung sehr wirksam gegen eindringende Feuchtigkeit, besonders bei nicht ganz dicht abschließenden Fensterdichtungen gesichert.

In der Zeichnung ist die Erfindung anhand eines Ausführungsbeispiels veranschaulicht. Dabei zeigen:
Fig. 1 einen Schnitt durch eine Kunststoffolie,
Fig. 2 eine Anordnung gestapelter Zuschnitte und
Fig. 3 ein Anwendungsbeispiel einer solchen Folie

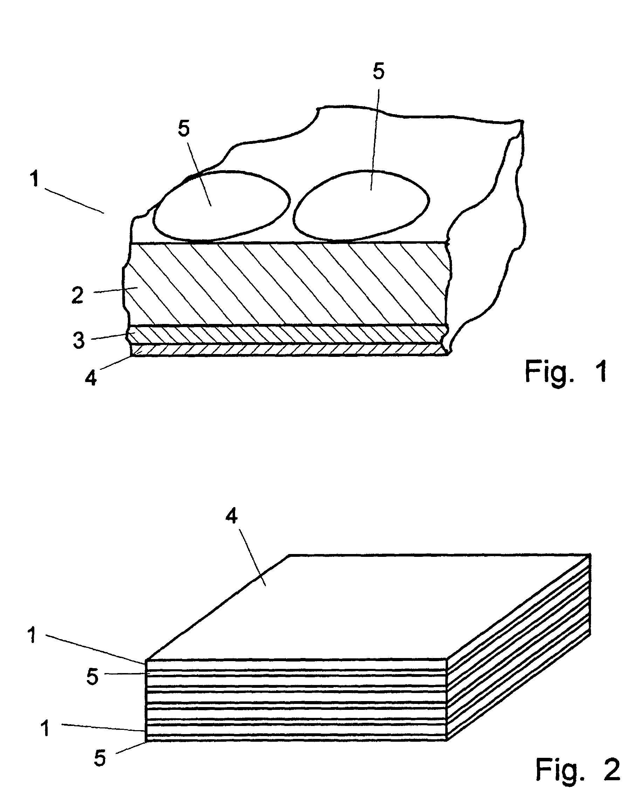

Mit 1 ist in den Figuren 1 und 2 eine Kunststoffolie bezeichnet, die aus einer, aus einem flammhemmenden Polypropylen bestehenden Trägerschicht 2 und einer an der einen Oberfläche angeordneten Zwischenschicht 3 besteht. Diese Zwischenschicht 3 besteht aus einem flammhemmenden Lack. Auf die von der Trägerschicht 2 abgewandten Oberfläche der Zwischenschicht 3 ist eine Silikonbeschichtung 4 aufgebracht, welche die Anhaftung von Klebstoff 5 verhindert, der auf der entgegenliegenden Oberfläche der Trägerschicht 2 angeordnet ist. Dadurch kann die Folie als schon konfektionierte Zuschnitte, welche auch bereits mit Klebstoff 5 beschichtet sind, auf einfachste Weise gestapelt werden, ohne ein Zusammenkleben mehrerer Folien befürchten zu müssen.

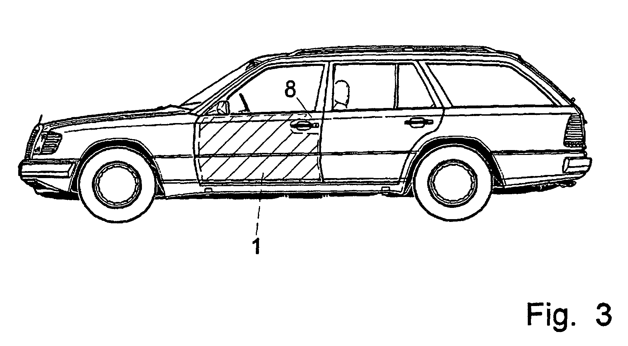

In Fig. 3 ist eine mögliche Anwendung dieses Kunststoffolienverbundes dargestellt. Die Kunststoffolie 1 ist auf die Innenseite eines innen liegenden Blechteils 8 aufgeklebt und dient dort als Feuchtigkeitssperre. Das Vordringen von Kondensat und Wasser zur Türinnenverkleidung wird dadurch wirksam verhindert.

## Patentansprüche

1. Kunststoffolie bestehend aus einem Polyolefin, insbesondere Polypropylen-Copolymer, **dadurch gekennzeichnet, daß** die Folie flammhemmend, wenigstens einseitig silikonisiert, an nicht silikonisierten Stellen wenigstens partiell mit Klebstoff beschichtet ist, und daß zwischen dem Polyolefin-Trägermaterial und der Silikonschicht eine flammhemmende Zwischenschicht, insbesondere ein flammhemmender Lack angeordnet ist.

2. Kunststoffolie nach Anspruch 1, **dadurch gekennzeichnet, daß** die Silikonschicht durch einen Silikonauftrag von 0,1 bis 2,5 µm Dicke gebildet wird, und daß die Zwischenschicht eine Dicke von 0,5 bis 10 µm aufweist.

3. Kunststoffolie nach Anspruch 1 oder 2, **dadurch gekennzeichnet, daß** die Silikon- und/oder die Zwischenschicht aus mehreren Einzelschichten gebildet sind.

4. Verwendung der Kunststoffolie nach einem der vorangehenden Ansprüche als Kondensschutzfolie und/oder Feuchtigkeitssperre für Innenraumverkleidungen in Kraftfahrzeugen.

5. Verwendung der Kunststoffolie nach Anspruch 4, **dadurch gekennzeichnet, daß** die Folie auf die Innenseiten von Blechen aufgeklebt ist, wobei ein möglichst geringer Abstand von den Innenverkleidungen gewahrt wird.

6. Verwendung der Kunststoffolie nach Anspruch 4, **dadurch gekennzeichnet, daß** die Folie zwischen dem für versenkbare Fenster freizuhaltenden Raum und einer dem Innenraum zugekehrten Innenverkleidung angeordnet ist.

## Claims

1. Plastics film consisting of a polyolefin, in particular polypropylene copolymer, **characterised in that** the film is flame-retardant, silicone-treated at least on one side, at least partially coated with adhesive at non-silicone-treated points and **in that** a flame-retardant intermediate layer, in particular a flame-retardant varnish, is disposed between the polyolefin carrier material and the silicone layer.

2. Plastics film according to Claim 1, **characterised in that** the silicone layer is formed by a silicone coat of a thickness of 0.1 to 2.5 µm, and that the intermediate layer is of a thickness of 0.5 to 10 µm.

3. Plastics film according to Claim 1 or 2, **characterised in that** the silicone and/or the intermediate layer is/are formed from a plurality of single layers.

4. Use of the plastics film according to any one of the preceding Claims as an anti-condensation film and/or a moisture barrier for interior panelling in motor vehicles.

5. Use of the plastics film according to Claim 4, **characterised in that** the film is stuck to the inner sides of metal sheets, wherein the smallest possible spacing from the inner panelling is observed.

6. Use of the plastics film according to Claim 4, **characterised in that** the film is disposed between the space which is to be kept free for lowerable windows and inner panelling which faces the interior.

## Revendications

1. Feuille en matière plastique composée d'une polyoléfine, notamment un copolymère de polypropylène, **caractérisée en ce que** la feuille est enduite de silicone au moins d'un côté et au moins partiellement recouverte d'agent adhésif aux endroits non enduits de silicone, de manière à en retarder la combustion, et **en ce qu'**entre le support en polyoléfine et la couche de silicone se trouve une couche intermédiaire retardant la combustion, notamment un vernis retardant la combustion.

2. Feuille en matière plastique selon la revendication 1, **caractérisé en ce que** la couche de silicone est formée par une application de silicone sur une épaisseur comprise entre 0,1 et 2,5 µm, et **en ce que** la couche intermédiaire présente une épaisseur comprise entre 0,5 et 10 µm.

3. Feuille en matière plastique selon la revendication 1 ou 2, **caractérisée en ce que** la couche de silicone et/ou la couche intermédiaire sont constituées par différentes couches.

4. Mise en oeuvre de la feuille en matière plastique selon l'une des revendications précédentes en tant que feuille de protection contre la condensation et/ou contre l'humidité pour des habillages d'habitacles de véhicules automobiles.

5. Mise en oeuvre de la feuille en matière plastique selon la revendication 4, **caractérisée en ce que** la feuille est collée sur les faces intérieures de tôles, sachant que l'on réserve un éloignement aussi faible que possible des panneaux d'habillage intérieurs.

6. Mise en oeuvre de la feuille en matière plastique selon la revendication 4, **caractérisée en ce que** la feuille est placée entre l'espace ménagé pour pouvoir baisser la vitre et un panneau d'habillage intérieur tourné vers l'habitacle.
